# EUROPÄISCHE PATENTANMELDUNG

(11) **EP 1 180 649 A1**
(43) Veröffentlichungstag der Anmeldung: **20.02.2002**
(21) Anmeldenummer: 00116992.9
(22) Anmeldetag: 08.08.2000
(51) Int. Cl.: F24J 2/00, F24J 2/50

(54) **Baukonstruktionsbeschichtung zur Minderung der Wärmeverluste an strukturierten Aussenbauteilen, u.a. Sichtmauerwerk**

(71) Anmelder: Siebel, Lothar, Dr.-Ing., 52224 Stolberg (DE); Mainka, Dieter, Dipl.-Ing., 52224 Stolberg (DE)
(72) Erfinder: Siebel, Lothar, Dr.-Ing., 52224 Stolberg (DE); Mainka, Dieter, Dipl.-Ing., 52224 Stolberg (DE)

(57) **Zusammenfassung**

Die Erfindung betrifft die Nutzung von solaren Wärmegewinnen an strukturierten opaken Bauteiloberflächen (z.B. Sichtmauerwerk, Sichtbeton, Holz, Dachziegel und Dachsteine) zur Minderung der Wärmeverluste von Räumen. Ziel und Aufgabe der Erfindung bestehen darin, die Energiegewinne durch Sonnenstrahlung besser zu nutzen, ohne daß eine kostenaufwendige und das Erscheinungsbild der Oberfläche (z.B. Fassade) erheblich beeinträchtigende Verkleidung erforderlich wird. Diese Aufgabe wird erfindungsgemäß dadurch gelöst, daß geeignete, sehr wasserdichte, transparente oder transluzente Beschichtungen aufgetragen werden, welche das Bauteil besser gegen Feuchteeinwirkungen von außen schützen und den Lichtabsorptionsgrad des Untergrundes nutzen sowie das Erscheinungsbild des Untergrundes nicht wesentlich beeinflussen.

## Beschreibung

Die Erfindung betrifft die Nutzung von solaren Wärmegewinnen an strukturierten opaken Bauteiloberflächen (z.B. Sichtmauerwerk, Sichtbeton, Dachziegel und Dachsteine) zur Minderung der Wärmeverluste von Räumen, insbesondere an bestehenden Gebäuden mit erhaltenswertem Erscheinungsbild der äußeren Oberflächen.

Bei Räumen, welche unterschiedlich zur Umgebung temperiert sind, insbesondere bei beheizten Räumen, treten an den opaken Bauteilen durch Wärmetransmission Wärmeverluste auf. Zusätzlich wirkt Sonneneinstrahlung ein, welche die Wärmeströme beeinflusst. Bei üblichen beheizten Räumen können Sonnenenergiegewinne verbucht werden, welche bei lichtdurchlässigen Bauteilen beachtlich sein können, bei opaken Bauteilen aber gewöhnlich gering sind und deshalb i.a. auch nicht rechnerisch berücksichtigt werden. Die Nutzung von Sonnenenergie mittels lichtdurchlässiger Bauteile ist aus raumklimatischen Gründen u.a. im Zusammenhang mit dem stark schwankenden Außenklima und Wärmebedarf von Sommer und Winter nur begrenzt passiv nutzbar. Da die Wärmetransmission durch opake Bauteile, wegen des großen Flächenanteils an der wärmetauschenden Hüllfläche, einen erheblichen Anteil der Wärmeverluste ausmacht, besteht Bedarf darin, die Verluste durch geeignete Maßnahmen zu reduzieren. Bisherige Maßnahmen durch zusätzliche lichtdurchlässige Außenverkleidungen an opaken Wänden sind bautechnisch schwierig sowie sehr kostenaufwendig. Insbesondere sind gestalterische Probleme dort gegeben, wo das Erscheinungsbild der Oberfläche nicht verändert werden soll oder kann (Denkmalschutz). Hier ist ein anderer Lösungsansatz erforderlich.

Ziel der Erfindung ist, unter Verwendung von sehr wasserdichten, transparenten oder transluzenten Beschichtungen auf u.a. Sichtmauerwerk einen geeigneten Konstruktionsaufbau herzustellen, der bei Nutzung des Lichtabsorptionsgrades des Untergrundes die solaren Wärmegewinne an opaken Bauteilen erheblich verbessert, indem diese besser gegen Feuchteeinwirkungen von außen geschützt werden. Bisherige Maßnahmen zur Verbesserung der solaren Wärmegewinne an opaken Außenbauteilen zielen auf folgende Maßnahmen ab:
Zusätzliche lichtdurchlässige Bauteilschalen, z.B. polycarbonate Dämmstoffe und/oder Verglasungen mit selektiver Strahlungsdurchlässigkeit, vor opaken Bauteilen.

Die v.g. Maßnahmen haben u.a. den Nachteil, daß durch die Verkleidung das Erscheinungsbild der Fassade, z.B. Sichtmauerwerk, erheblich beeinträchtigt wird und ein erheblicher Kostenaufwand entsteht. Die Aufgabe der Erfindung besteht nun darin, die Energiegewinne durch Sonnenstrahlung besser zu nutzen, ohne daß eine kostenaufwendige und das Erscheinungsbild des Bauteils (z.B. Fassade) erheblich beeinträchtigende Verkleidung erforderlich wird.

Diese Aufgabe wird erfindungsgemäß dadurch gelöst, daß geeignete sehr wasserdichte, transparente oder transluzente Beschichtungen auf strukturierte Außenbauteile, u.a. Sichtmauerwerk, so aufgetragen werden, daß der Beschichtungsuntergrund sichtbar bleibt und seine günstigen Absorptionseigenschaften für Licht genutzt werden. Ein wesentlicher Vorteil des Verfahrens liegt darin, daß die bereits vorhandenen Bauteile mit porösen Oberflächen von Altbauten für die Verwendung der erfindungsgemäßen Baukonstruktionsbeschichtung geeignet sind. Die Beschichtung kann mittels üblicher Anstrichmethoden auf die Unterkonstruktion aufgetragen werden. Durch die vorhandenen Vertriebsstrukturen, das heißt Farbenhersteller, Handel und Malerbetriebe, ist die gewerbliche Nutzung möglich. Nachfolgend soll die Erfindung an einem Beispiel näher erläutert werden. Dabei wird auf eine bislang unübliche Grenzflächenbetrachtung bei den Wärmetransportmechanismen abgehoben.

Über den mittleren Wärmeverlust von Außenbauteilen entscheiden die Wärmeübergangsmechanismen an der äusseren Oberfläche. Hierbei sind mehrere Einflüsse praktisch kaum von der Dämmeigenschaft des Aussenbauteils abhängig. An der äusseren Oberfläche wird Wärme durch Konvektion abgegeben. Diese ist von der Temperaturdifferenz zwischen der Oberfläche und der angrenzenden Aussenluft abhängig, welche in der Heizperiode bei üblichen Wänden aus stationärer Sicht im Mittel kaum mehr als 1 K beträgt. Bei diesem Wärmetransportmechanismus hat die Wärmedämmeigenschaft der Wand Einfluss, weil die Oberflächentemperatur durch diese beeinflusst wird.

Hingegen sind die folgenden Wärmetransportmechanismen weitestgehend unabhängig von der Wärmedämmeigenschaft des Aussenbauteils. Der Strahlungswärmeaustausch wird sinnvollerweise in zwei Anteile gesplittet. Zum einen ist der Anteil wirksam, welcher von der Wärmeabstrahlung abhängig ist, die wiederum von der Oberflächentemperatur hauptsächlich beeinflusst wird und der Gegenstrahlung, welche im Mittel durch den kalten Kosmos (wolkenlose Atmosphäre), der Wolkenunterseitentemperatur, der Temperatur des Erdbodens sowie gegenüberliegender Bäume und Häuser bestimmt wird. Es kann vereinfacht angenommen werden, dass die Strahlungs - Temperaturdifferenz in der Heizperiode im Mittel für Aussenwände gleich oder größer 3 Kelvin beträgt und dies kaum, das heißt zu höchstens einem Drittel, abhängig von der Wärmedämmeigenschaft des Aussenbauteils.

Eine weitere wesentliche Wärmeabgebe erfolgt durch Befeuchtung der Bauteile, z.B. durch Niederschlagswasser und der anschliessenden Verdunstung. In großen Teilen Europas sind viele Regentage zu erwarten und damit auch beachtliche Verdunstungswärmemengen. Die verdunstenden Feuchtemengen an Aussenbauteilen werden durch die Wasseraufnahmefähigkeit der äusseren Bauteilschicht stark beeinflusst. Es ist grundsätzlich günstig, zumindest für die mit Regen beaufschlagten Gebäudeteile geringe Wasseraufnahmefähigkeiten anzustreben.

Zum anderen gibt es solare Strahlungsgewinne, die in Form von direkter kurzwelliger Strahlung auf die Aussenbauteiloberflächen, abhängig von der Himmelsrichtung, der Abschattung und dem Höhenwinkel der Sonne (Weglänge der Strahlung durch die Atmosphäre), einwirkt. Hinzu kommt die diffuse Himmelsstrahlung, welche auch vom Höhenwinkel der Sonne und dem Verbauungsgrad beeinflusst wird. Die mittlere Zustrahlung auf Aussenwände kann in der Heizperiode mit > 60 W/m² angenommen werden.

Die kurzwellige solare Strahlungsenergie wird von der Bauteiloberfläche, abhängig vom Absorptionsgrad, aufgenommen und durch die schon genannten Transportmechanismen Konvektion, Wärmestrahlung und Verdunstung an die Umgebung abgegeben, wobei ein Teil der Wärmemenge auch in die Konstruktion eindringt bzw. im Mittel zu einer nennenswerten Temperaturerhöhung führt.

Kalkulationen mit realistischen Annahmen zeigen, dass die mittleren Wärmeverluste an einem Aussenbauteil in starkem Maße nicht vom Wärmedurchgangskoeffizienten abhängig sind, sondern von den genannten Mechanismen im wesentlichen beeinflusst werden. Durch solare Gewinne und der negativ wirkenden Feuchteverdunstung sind, im Vergleich zu den konvektions- und wärmestrahlungsbedingten Anteilen, erhebliche Wärmeübertragungen wirksam, die den effektiven Wärmeverlust hauptsächlich beeinflussen können.

Mit der erfindungsgemässen Baukonstruktionsbeschichtung ist bei bestehenden Gebäuden mit Sicht- oder Verblendmauerwerk o.ä. eine günstige Wärmebilanz herstellbar, indem die Aussenoberflächen mit einer transparenten oder transluzenten, sehr wasserdichten Beschichtung versehen werden, welche im wesentlichen ohne Rissebildungen auch langfristig für eine geringe Wasseraufnahmefähigkeit sorgt. Durch diese Massnahme wird die Strahlungsabsorption gegenüber kurzwelliger Strahlung (solarer Einstrahlung) hoch gehalten und die Wasseraufnahme und damit Verdunstung nach Niederschlägen oder Sorption bei Abkühlungen gering gehalten. Insbesondere für die Wetterseiten (hierzulande Süd- und Westseiten) ist damit eine erhebliche Verringerung der Wärmeverluste herstellbar.

## Patentansprüche

1. Baukonstruktionsbeschichtung zur Minderung der Wärmeverluste an strukturierten Außenbauteilen, u.a. Sichtmauerwerk, **dadurch gekennzeichnet, daß** sie sehr wasserdicht, transparent oder transluzent ist und so die solare Energie mittels des Lichtabsorptionsgrades des Untergrundes, bei gleichzeitiger Minderung der Verdunstungswärmeverluste, nutzt sowie das Erscheinungsbild des Untergrundes nicht wesentlich beeinflusst.

2. Baukonstruktionsbeschichtung zur Minderung der Wärmeverluste an strukturierten Außenbauteilen, u.a. Sichtmauerwerk, nach Anspruch 1, **dadurch gekennzeichnet, daß** durch Sonnenenergiegewinne wesentliche Anteile der Wärmeverluste gemindert werden können.

3. Baukonstruktionsbeschichtung zur Minderung der Wärmeverluste an strukturierten Außenbauteilen, u.a. Sichtmauerwerk, nach Anspruch 1, **dadurch gekennzeichnet, daß** Wärmeverluste durch Verdunstung von Feuchte, die durch Schlagregen und Sorption bei unbeschichteten Konstruktionen und Konstruktionen mit ungeeigneten Beschichtungen einwirken, verringert werden. Durch die erfindungsgemäße Baukonstruktionsbeschichtung wird verhindert, daß Feuchte außenseitig auf die Baustoffporen unmittelbar einwirken kann und die damit verbundenen größeren Verdunstungswärmeverluste auftreten.

4. Baukonstruktionsbeschichtung zur Minderung der Wärmeverluste an strukturierten Außenbauteilen, u.a. Sichtmauerwerk, nach Anspruch 1, **dadurch gekennzeichnet, daß** die Beschichtung auf Mauerwerk, Beton, Holz, Dachziegel und Dachsteinen aufgetragen werden kann.

5. Baukonstruktionsbeschichtung zur Minderung der Wärmeverluste an strukturierten Außenbauteilen, u.a. Sichtmauerwerk, nach Anspruch 1, **dadurch gekennzeichnet, daß** die Beschichtung durch eine besonders gute Haftung auf dem Untergrund keine wesentliche Neigung zur Rissebildung und Blasenbildung aufweist.
